# EUROPEAN PATENT SPECIFICATION

(11) **EP 4 581 693 B1**
(45) Date of publication and mention of the grant of the patent: **10.12.2025**
(21) Application number: 23765195.5
(22) Date of filing: 31.08.2023
(51) Int. Cl.: H01M 8/04007

(54) **SYSTEM AND METHOD FOR TEMPERATURE MANAGEMENT SYSTEM FOR A FUEL CELL UNIT**
SYSTEM UND VERFAHREN ZUR TEMPERATURREGULIERUNG EINER BRENNSTOFFZELLE
SYSTÈME ET PROCÉDÉ POUR SYSTÈME DE GESTION DE TEMPÉRATURE POUR UNE UNITÉ DE PILE À COMBUSTIBLE

(30) Priority: 31.08.2022 US 202263402781 P
(43) Date of publication of application: 09.07.2025
(73) Proprietor: BRP-Rotax GmbH & Co. KG, 4623 Gunskirchen (AT)
(72) Inventor: HINDINGER, Thomas, 4501 Neuhofen / Krems (AT)
(74) Representative: Murgitroyd & Company
(86) International application number: PCT/EP2023/073918
(87) International publication number: WO 2024/047171

(56) References cited:
- WO-A1-2021/170213
- CN-A- 110 120 533
- CN-A- 113 793 947
- US-A1- 2021 159 520

## Description

### TECHNICAL FIELD

The present technology relates to fuel cell units. Specifically, the present technology relates to temperature management systems for fuel cell units and methods for regulating temperatures of fuel cell units.

### BACKGROUND

Fuel cell technology is becoming increasingly prevalent, notably in vehicles to replace internal combustion engines, as the emissions of fuel cell generally consist of warm air and water vapor. Thus, fuel cell technology can provide a clean energy source for vehicles and other technologies.

Fuel cells and fuel cell units can be sensitive to their operating temperature. Indeed, if the operating temperature is too low (e.g., below water's freezing temperature), fluids in the fuel cells and fuel cell units, such as water, produced as a result of the chemical reaction occurring in the fuel cells and fuel cell units, can freeze. On the other hand, high operating temperatures can be detrimental to a lifespan of the fuel cells and fuel cell units.

Regulating temperatures of the fuel cells and fuel cell units can be difficult because components and fluids that are fluidly connected to the fuel cells and fuel cell units cannot be ionized.
WO20211/70213 discloses a thermal management system for a fuel cell vehicle comprising: a first cooling circuit filled with a first coolant, having at least a first pump, a second cooling circuit filled with a second coolant, having at least a second pump, a third cooling circuit filled with a third coolant, having at least a third pump, wherein the first, second and third cooling circuits are fluidically in dependent from one another, wherein there is provided at least a selective heat exchanger arrangement, for selectively coupling thermally the third cooling circuit with the first cooling circuit and/or with the second cooling circuit, under predefined conditions.
US20211/59520 discloses a thermal management system for a fuel cell vehicle. The thermal management system includes a fuel cell stack, a heater configured to use power generated by the fuel cell stack, a radiator configured to cool a coolant, a pump configured to circulate the coolant, and a valve configured to control a temperature of the coolant by adjusting a flow rate of the coolant supplied to the pump from at least one of the fuel cell stack, the heater, or the radiator.
CN113793947 discloses a fuel cell waste heat utilization system and an energy system, used in cooperation with a fuel cell device.
CN110120533 discloses a cooling system of fuel cell system for vehicles.

Therefore, there is a desire for a temperature management system for a fuel cell unit that can overcome at least some of the above-described drawbacks.

### SUMMARY

It is an object of the present technology to ameliorate at least some of the inconveniences present in the prior art.

According to one aspect of the present technology, there is provided a a temperature management system for a fuel cell unit according to claim 1.

In some embodiments, the valve of the system is selectively adjustable to a plurality of configurations intermediate to the first and third configurations, and when the valve is in one of the plurality of configurations, the valve is configured to direct fluid along the first and third paths.

In some embodiments, the valve is selectively and progressively adjustable from the first configuration to the one of the plurality of configurations, and the valve is configured to progressively decrease fluid flow along the first path and progressively increase fluid flow along the third path, as the valve is progressively adjusted during operation.

In some embodiments, the battery is thermally connected to the heat exchanger and electrically connectable to the fuel cell unit.

In some embodiments, the pump of the system is a first pump, and further includes a second pump fluidly connected to the heat exchanger. The second pump is operable to pump an other heat exchange fluid along a fourth path, the fourth path being defined at least in part by the heat exchanger, the pump and the battery.

In some embodiments, the temperature management system further includes a motor fluidly connected to the second pump, and the fourth path is further defined by the motor.

In some embodiments, the temperature management system further includes a controller operatively connected to the valve, the controller being configured to selectively adjust the configuration of the valve.

In some embodiments, the controller is configured to selectively adjust the configuration of the valve in response to a temperature of the fuel cell unit.

In some embodiments, the temperature management system further includes a first temperature sensor communicatively connected to the controller, the first temperature sensor being configured to measure the temperature of the fuel cell unit.

In some embodiments, the controller is configured to selectively adjust the configuration of the valve in response to a temperature of the battery.

In some embodiments, the temperature management system further includes a second temperature sensor communicatively connected to the controller, the second temperature sensor being configured to measure the temperature of the battery.

In some embodiments, the temperature management system further includes the fuel cell unit.

In some embodiments, the valve is made of a non-ionizing material.

In some embodiments, the temperature management system is configured to use distilled water as the fluid.

According to another aspect of the present technology, there is provided a method for regulating a temperature of a fuel cell unit according to claim 14.

In some embodiments, the first temperature is about five degrees Celsius; and the second temperature is about fifty-five degrees Celsius.

In some embodiments, the method further includes, in response to the temperature being more than a third temperature but less than the second temperature, the third temperature being more than the first temperature, adjusting the configuration of the valve in one of a plurality of configurations intermediate to the first and third configurations, in which the valve is configured to direct fluid through the first and third paths, and causing the heater to stop heating fluid flowing along the first path.

In some embodiments, the first temperature is about five degrees Celsius, the second temperature is about fifty-five degrees Celsius, and the third temperature is about forty-five degrees Celsius.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

It must be noted that, as used in this specification and the appended claims, the singular form "a", "an" and "the" include plural referents unless the context clearly dictates otherwise.

As used herein, the term "about" in the context of a given value or range refers to a value or range that is within 20%, preferably within 10%, and more preferably within 5% of the given value or range.

As used herein, the term "and/or" is to be taken as specific disclosure of each of the two specified features or components with or without the other. For example "A and/or B" is to be taken as specific disclosure of each of (i) A, (ii) B and (iii) A and B, just as if each is set out individually herein.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of implementations of the present technology will become apparent from the following description and the accompanying drawings.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a schematic diagram of a temperature management system according to an embodiment of the present technology;
Figure 2 is a schematic diagram of a portion of the temperature management system of Figure 1, with a first fluid flow path being shown in broken lines and one battery path being shown in dash dotted lines;
Figure 3 is a schematic diagram of the temperature management system portion of Figure 2, with a second fluid flow path being shown in broken lines and another battery path being shown in dash dotted lines;
Figure 4 is a schematic diagram of temperature management system portion of Figure 2, with a third fluid flow path being shown in broken lines;
Figure 5 is a schematic diagram of the temperature management system portion of Figure 2, with the first and second fluid flow paths and the battery path being highlighted;

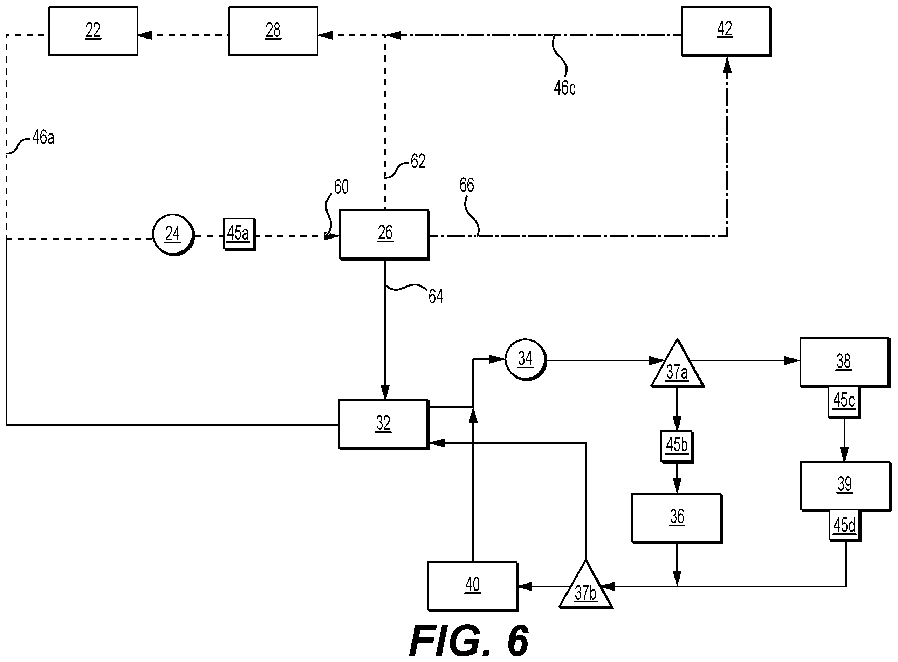

Figure 6 is a diagram of the temperature management system portion of Figure 2, with the first and third fluid flow paths being highlighted;
Figure 7 is a perspective view of a valve and a pump of the temperature management system of Figure 1;
Figure 8 is a perspective view taken from a top, rear, right side of a guiding member of the valve of Figure 7;
Figure 9 is a perspective view taken from a top, front, left side of the guiding member of Figure 8;
Figure 10 is a cross-sectional view taken along a center plane of the valve of Figure 7, with the valve being in a first configuration;
Figure 11 is the cross-sectional view of Figure 10, with the valve being in a second configuration;
Figure 12 is the cross-sectional view of Figure 10, with the valve being in a third configuration;
Figure 13 is the cross-sectional view of Figure 10, with the valve being in a configuration intermediate to the first and third configurations;
Figure 14 is a perspective view of a temperature management system according to another non-limiting embodiment of the present technology; and
Figure 15 is a logic diagram illustrating a method for operating the temperature management system of Figure 1.

### DETAILED DESCRIPTION

The present disclosure is not limited in its application to the details of construction and the arrangement of components set forth in the following description or illustrated in the drawings. The disclosure is capable of other embodiments and of being practiced or of being carried out in various ways. Also, the phraseology and terminology used herein is for the purpose of description and should not be regarded as limiting. The use of "including", "comprising", or "having", "containing", "involving" and variations thereof herein, is meant to encompass the items listed thereafter as well as, optionally, additional items. In the following description, the same numerical references refer to similar elements.

The present technology relates to temperature regulating management systems for fuel cell units. It is to be noted that there are various types of fuel cells. There are high-temperature fuel cells such as solid oxide fuel cells, and there are low temperature fuel cells such as hydrogen fuel cells. The present disclosure describes systems having low temperature fuel cells, specifically hydrogen fuel cells. Fuel cell units, which can be used to electrically power various machines, have ideal operating temperatures. These ideal operating temperatures can vary according to a number of factors. For example, the ideal operating temperature of a fuel cell unit can vary depending on whether or not the fuel cell unit is subjected to humidification. As will become apparent from the following description, the temperature regulating management system according to the present technology can regulate (increase, decrease and maintain) a temperature of the fuel cell unit so that the fuel cell unit operates at ideal operating temperatures.

The temperature regulating management system will be described with reference to a fuel cell unit of a vehicle. Although only one fuel cell unit will be described herewith, it is contemplated that there could be two or more fuel cell units that could be connected in series and/or in parallel.

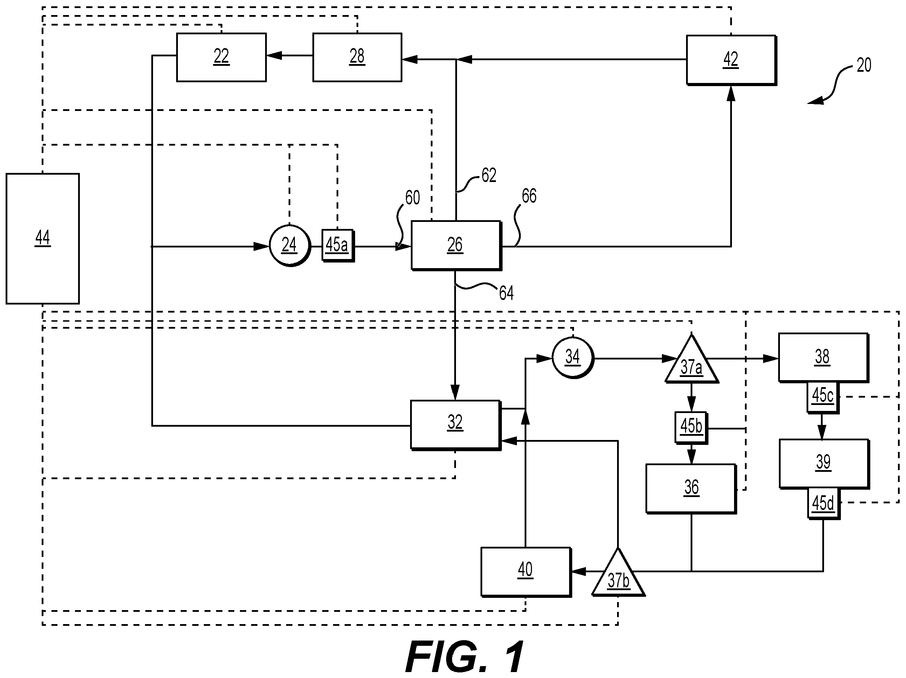

A temperature management system 20, also referred to as a temperature regulating system 20, according to an embodiment of the present technology is shown in Figure 1. The temperature management system 20 is operatively connectable to a fuel cell unit 22. The temperature management system 20 includes a pump 24 and a valve 26, both described in more detail below, for circulating a heat exchange fluid through the temperature management system 20. The system also includes a heater 28 for selectively heating the heat exchange fluid. The heater 28 will be described in more detail below. The temperature management system 20 further includes a heat exchanger 32 and a radiator 42 for selectively transferring heat out of the heat exchange fluid. The heat exchanger 32 and a radiator 42 will also be described below. While both the heat exchanger 32 and the radiator 42 are components configured for heat exchange, the heat exchanger 32 is arranged to exchange heat between two fluids, while the radiator 42 is arranged to exchange heat between the heat exchange fluid and surrounding air.

The temperature management system 20 further includes a secondary pump 34, a valve 37a, and a valve 37b, which are all for circulating a secondary heat exchange fluid to a vehicle battery 36, a motor 38, a motor control unit (MCU) 39 and a battery radiator 40. Similarly to the radiator 42, the battery radiator 40 is arranged to exchange heat between the secondary heat exchange fluid and surrounding air. Depending on the embodiment, the temperature management system 20 could be provided with the fuel cell unit 22, the battery 36, the motor 38, and the motor control unit 39. The temperature management system 20 further includes a controller 44 and sensors 45a, 45b, 45c, 45d, which will be described below.

The heat exchange fluid flows through the temperature management system 20 when in operation and is used to regulate the temperature of the fuel cell unit 22. **In** the present embodiment, the heat exchange fluid is distilled water, though it is contemplated that the heat exchange fluid could be another non-ionizing fluid such as ethylene glycol. Non-ionizing fluid is used because otherwise the fluid could conduct electrical current, which could be detrimental to the fuel cell unit 22 as well as to the temperature management system 20. It is to be noted that the secondary heat exchange fluid is not restricted to non-ionizing fluid, as the secondary fluid does not come into contact with the fuel cell unit 22. It is contemplated that in some embodiments, the secondary heat exchange fluid could be selected to have a same or a different heat capacity than the heat exchange fluid.

As will become apparent from the following description, it is contemplated that the temperature management system 20 could have additional and/or alternative components than those described hereabove. For instance, in some embodiments, the motor 38 and/or the motor control unit 39 could be omitted from the temperature management system 20.

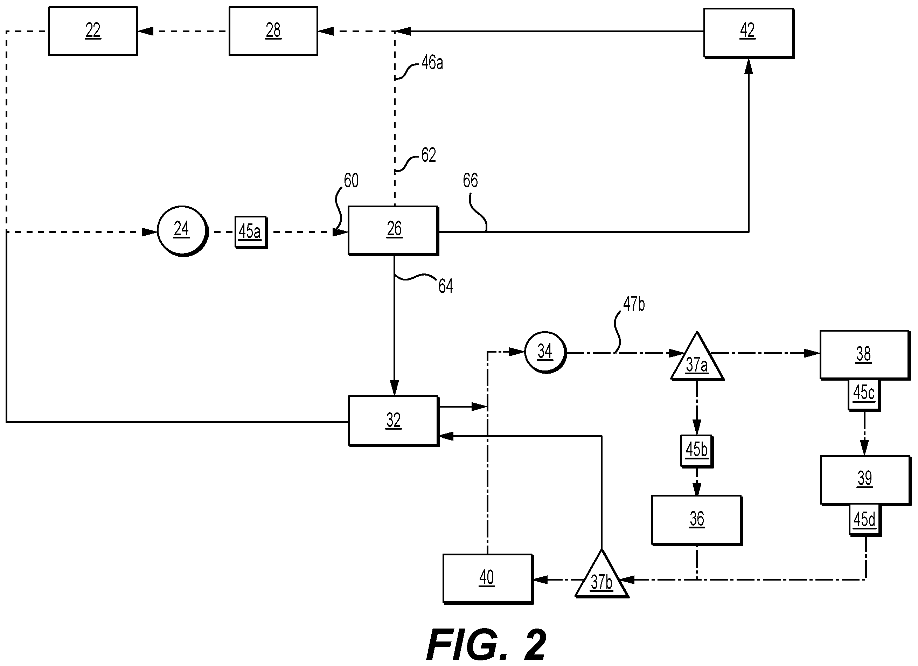

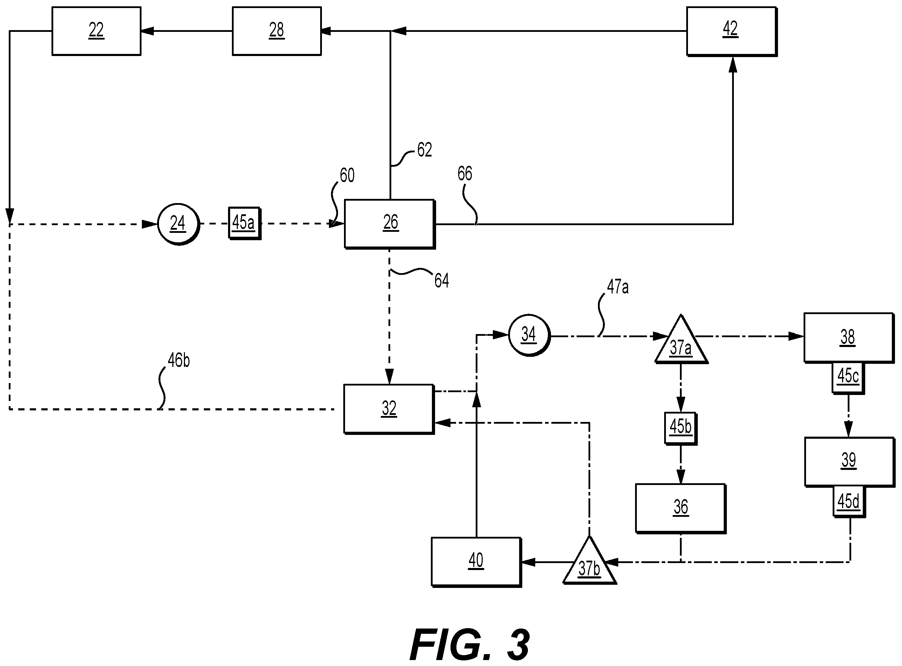

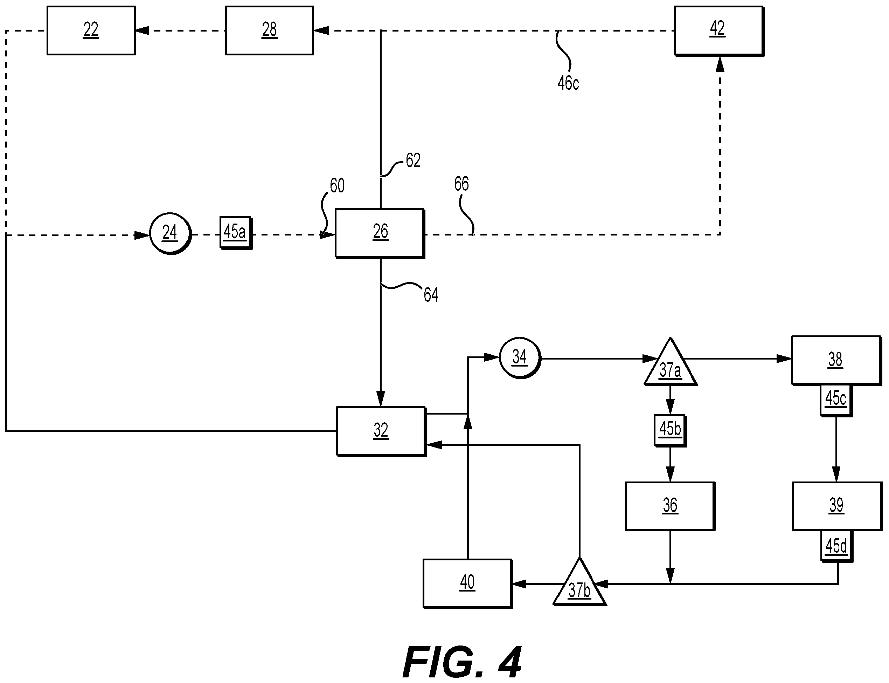

The temperature management system 20 is configured to direct fluid along various paths depending on a multitude of operating conditions which will be described below. The fluid is guided along the various fluid flow paths by the valve 26. Specifically, the fluid is directed along a first path 46a (shown by broken lines in Figure 2) when the valve 26 is in a first configuration, along a second path 46b (shown by broken lines in Figure 3) when the valve 26 is a second configuration, and along a third path 46c (shown by broken lines in Figure 4) when the valve 26 is in a third configuration. As will be described below, fluid can be directed, simultaneously, along one or more of the first, second and third paths 46a, 46b, 46c. Details of the valve 26 in the first, second, and third configurations are set out below.

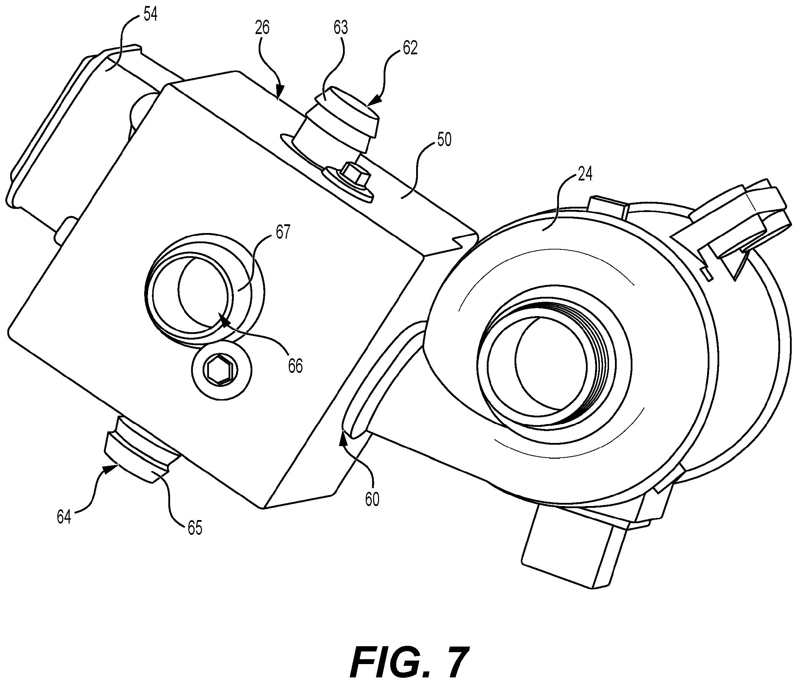

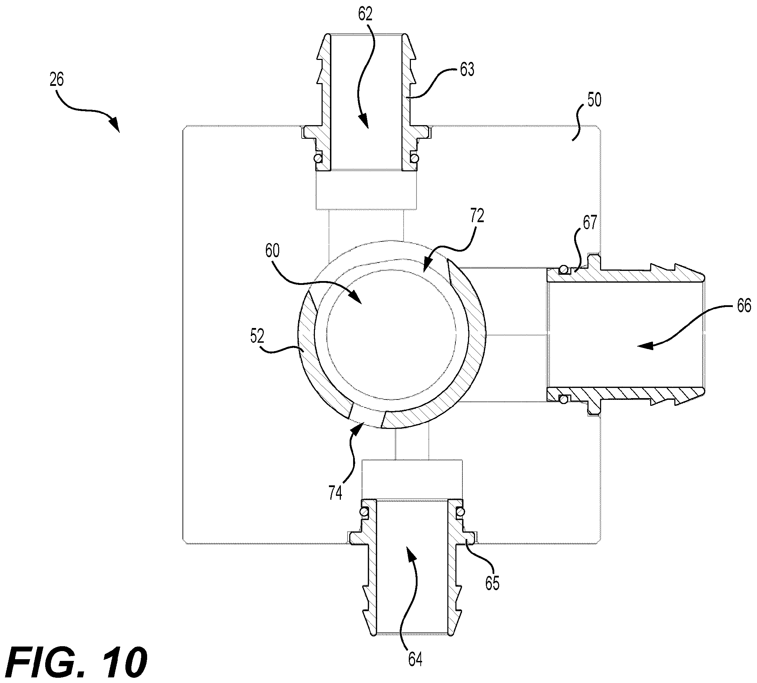

Referring to Figure 2, the first path 46a is defined by the pump 24, the valve 26, the heater 28, and the fuel cell unit 22. Fluid flowing along the first path 46a flows specifically through an inlet 60 of the valve 26 and an outlet 62 of the valve 26 (see Figures 7 and 10). In some embodiments, the first path 46a could be defined by additional components, for instance tubing for directing and containing fluid flow. As will be described in greater detail below, fluid pumped by the pump 24 enters the valve 26 through the inlet 60, exits through the outlet 62, and enters the heater 28 in which the fluid is heated. It is contemplated that the fluid could be heated by the heater 28 without entering therein. Then, the heated fluid flows to and heats the fuel cell 22, before being pumped by the pump 24 again. It is contemplated that in other embodiments, the components could be positioned differently, and as a result the sequencing of the fluid entering and/or leaving components could change.

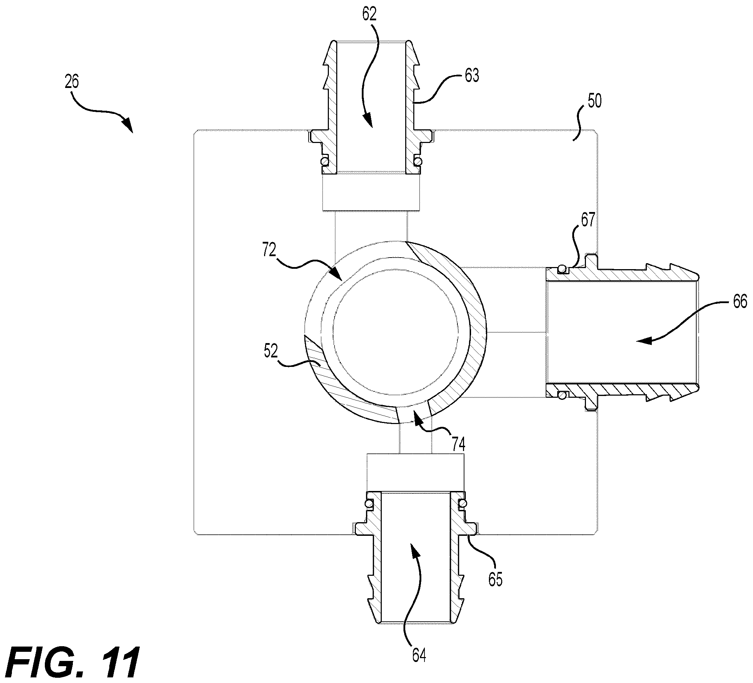

Referring to Figure 3, the second path 46b is defined, at least, by the pump 24, the valve 26, and the heat exchanger 32. Fluid flowing along the second path 46b flows specifically through the inlet 60 of the valve 26 and an outlet 64 of the valve 26 (see Figures 7 and 11). In the present embodiment, part of the second path 46b merges with part of the first path 46a. The fluid pumped by the pump 24 enters the valve 26 through the inlet 60, exits through the outlet 64, enters the heat exchanger 32, in which the fluid can be cooled, before being pumped by the pump 24 again.

The heat exchanger 32 is thermally connected to the battery 36, such that heat exchange occurring in the heat exchanger 32 can assist in regulating a temperature of the battery 36. Specifically, the heat exchanger 32 is thermally connected to the battery 36 via a first battery fluid flow path 47a, henceforth referred to as first battery path 47a, (shown by dash dotted lines in Figure 3).

Similarly, the battery radiator 40 is also thermally connected to the battery 36, such that heat exchange occurring in the battery radiator 40 can assist in regulating the temperature of the battery 36. Specifically, the battery radiator 40 is thermally connected to the battery 36 via a second battery fluid flow path 47b, henceforth referred to as second battery path 47b, (shown by dash dotted lines in Figure 2).

Fluid is directed along one of the first and second battery paths 47a, 47b based on the position of the valve 37b. Furthermore, the first and second battery paths 47a, 47b are fluidly independent from the first, second and third fluid paths 46a, 46b, 46c. In other words, fluid travelling along the first and second battery paths 47a, 47b does not blend with the fluid travelling in the first, second and third fluid paths 46a, 46b, 46c. It is to be noted that in some embodiments, there could be a single battery path and/or three or more battery paths.

When the valve 37b is in a first position, fluid flows along the first battery path 47a. Referring particularly to Figure 3, the first battery path 47a is defined by the heat exchanger 32, the secondary pump 34, the valve 37a, the battery 36, the motor 38, the motor control unit 39 and the valve 37b. In some embodiments, the first battery path 47a could be defined only by the heat exchanger 32, the secondary pump 34 and the battery 36. As will be described below, in some instances, when the valve 37a is in a first position, fluid pumped by the secondary pump 34 is configured to flow from the heat exchanger 32 toward the battery 36 to regulate a temperature thereof, before returning to the heat exchanger 32. In other instances, when the valve 37a is in a second position, fluid pumped by the secondary pump 34 is configured to additionally flow, in parallel, from the heat exchanger 32 toward the battery 36 to regulate a temperature thereof, and from the heat exchanger 32 to the motor 38 and the motor control unit 39, also to regulate temperatures thereof, before returning to the heat exchanger 32.

When the valve 37b is in a second position, fluid flows along the second battery path 47b. Referring particularly to Figure 2, the second battery path 47b is defined by the battery radiator 40, the secondary pump 34, the valve 37a, the battery 36, the motor 38, the motor control unit 39 and the valve 37b. Thus, the second battery path 47b notably differs from the first battery bath 47a in that, when flowing along the second battery path 47b, fluid is configured to bypass the heat exchanger 32, and flow through the radiator 40 instead. As will be described below, in some instances, when the valve 37a is in a first position, fluid pumped by the secondary pump 34 is directed to flow from the battery radiator 40 toward the battery 36 to regulate a temperature thereof, before returning to the battery radiator 40. In other instances, when the valve 37a is in a second position, fluid pumped by the secondary pump 34 is directed to also flow, in parallel, from the battery radiator 40 toward the battery 36 to regulate a temperature thereof, and from the battery radiator 40 to the motor 38 and the motor control unit 39, also to regulate temperatures thereof, before returning to the battery radiator 40.

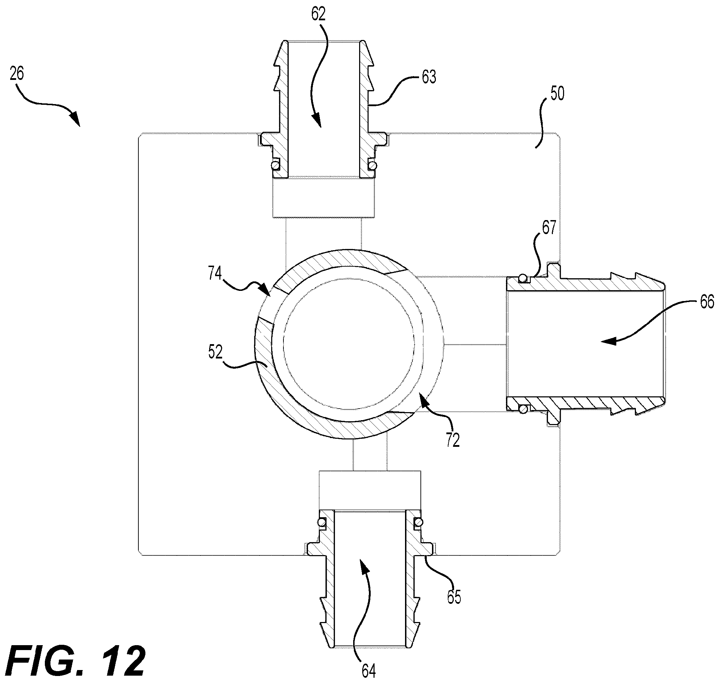

Referring now to Figure 4, the third path 46c is defined, at least, by the pump 24, the valve 26, the radiator 42, and the fuel cell unit 22. The third path 46c flows specifically through the inlet 60 and an outlet 66 (see Figure 7 and 12). As will be described below, fluid pumped by the pump 24 enters the valve 26 through the inlet 60, exits through the outlet 66, and flows through the radiator 42, heat being drawn from the fluid and transferred to surrounding ambient air, thereby cooling the fluid. During operation, fluid then cools the fuel cell unit 22, before being pumped by the pump 24 again. It will be noted that while flowing along the third path 46c, the fluid does not engage the heater 28. In the present embodiment, part of the path 46c merges with part of the first path 46a, such that the fluid happens to pass through the heater 28, which is turned off, before cooling the fuel cell unit 22.

While only three fluid flow paths are described herewith, it is contemplated that there could be additional fluid flow paths in other embodiments of the present technology.

With reference to Figures 7 to 13, the valve 26 will now be described in greater detail. The valve 26, which is made from a non-ionizing material so as to not ionize fluid passing therethrough, has an enclosure 50, a guiding member 52 and a valve actuator 54.

The enclosure 50 defines the inlet 60, the outlet 62, the outlet 64, and the outlet 66 mentioned above. It is contemplated that in other embodiments, the enclosure 50 could define more or fewer inlets and/or outlets. In the present embodiment, the enclosure 50 has a generally cubic shape, but it is contemplated that the enclosure 50 could be shaped differently. For example, in some embodiments, the enclosure 50 could have a cylindrical shape.

The valve 26 includes a pipe connector (not shown) received in the inlet 60, a pipe connector 63 received in the outlet 62, a pipe connector 65 received in the outlet 64, and a pipe connector 67 received in the outlet 66. It is contemplated that in some embodiments the pipe connectors could be integral with the enclosure 50. The pipe connectors enable the valve 26 to connect to various components, while providing a seal to prevent leakage and/or entry of contaminants therein.

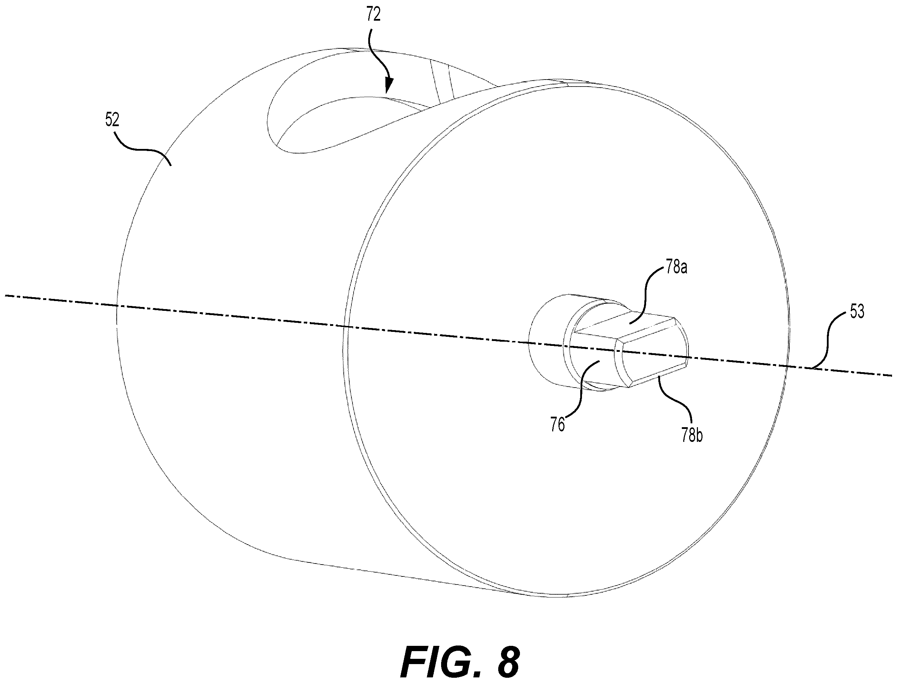

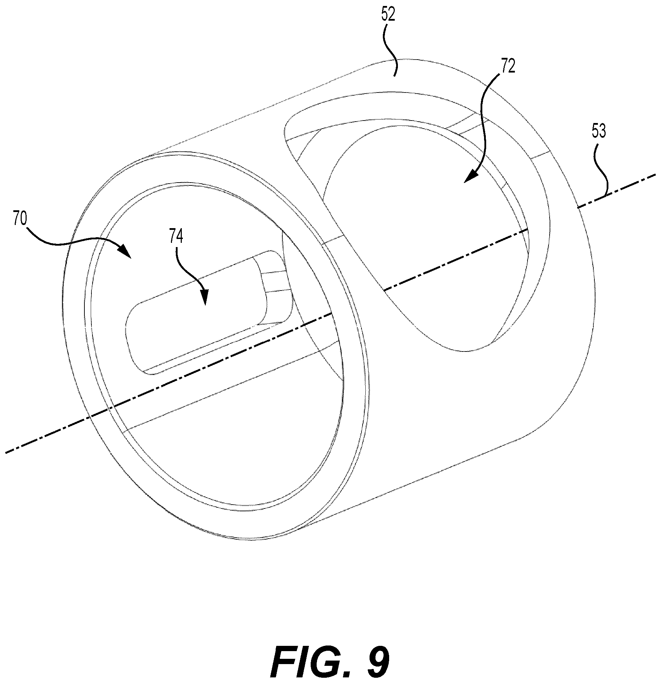

With reference to Figures 8 and 9, the guiding member 52 is received in the enclosure 50 and is generally cylindrical. It is contemplated that in some embodiments, the guiding member 52 could have another shape. The guiding member 52 defines a central axis 53. The guiding member 52 is configured to rotate about the central axis 53.

The guiding member 52 has, at one cylinder base thereof, an outwardly extending protrusion 76 that has two flat edges 78a, 78b. It is contemplated that in other embodiments, the protrusion 76 could be shaped differently. For example, the protrusion 76 could have an oval shape. The protrusion 76 is configured to be received in an aperture (not shown) defined in a part of the valve actuator 54, where the aperture is complementary to the protrusion 76 so as to rotationally fix the guiding member 52 to part of the valve actuator 54.

At the other cylinder base thereof, the guiding member 52 defines a base aperture 70 that is co-axial with the central axis 53, and that is configured to be aligned with the inlet 60.

Furthermore, the guiding member 52 defines, on a cylinder peripheral surface thereof, a peripheral aperture 72 and a peripheral aperture 74 that are configurable to be aligned with one or more of the outlets 62, 64, 66, depending on the rotational position of the guiding member 52. The peripheral apertures 72, 74 are circumferentially spaced. Specifically, the peripheral apertures 72, 74 are circumferentially spaced by about 80 degrees. In other embodiments, the peripheral apertures 72, 74 could be spaced differently, for example by being opposite to one another (i.e., spaced by about 180 degrees). The peripheral aperture 72 is circular, whereas the peripheral aperture 74 is rectangular. It is contemplated that the peripheral apertures 72, and 74 could be shaped differently. The peripheral aperture 72 is larger than the peripheral aperture 74, such that the peripheral aperture 72 covers a greater arcuate length of the circumference of the guiding member 52 than the peripheral aperture 74. It is contemplated that the configuration of the peripheral aperture 72, 74 could be different in other embodiments.

The guiding member 52 is disposed in the enclosure 50 such that the base aperture 70 is aligned with the inlet 60. Thus, the inlet 60, like the base aperture 70, is co-axial with the central axis 53. As a result of this alignment, the base aperture 70 and the inlet 60 are in constant alignment, even upon rotation of the guiding member 52 about the central axis 53.

The guiding member 52 is adjustable to a number of different positions by rotating the guiding member 52 about the central axis 53. Notably, the guiding member 52 is adjustable to a first position (shown in Figure 10), a second position (shown in Figure 11), and a third position (Figure 12). It is understood that although the present description refers to the first, second and third positions, any one of the first, second and third could more or less offset from what is shown in Figures 10 to 12. It is also noted that the numbered nomenclature is for simplicity of reference and does not represent any specific order or hierarchy.

With reference to Figure 10, with the guiding member 52 in the first position, the peripheral aperture 72 is at least partially aligned with the outlet 62, and the peripheral aperture 74 is offset from the outlets 62, 64, 66. When the guiding member 52 is in the first position, the valve 26 is in the first configuration mentioned above, in which the valve 26 is configured to direct fluid passing therethrough along the first path 46a through the outlet 62.

With reference to Figure 11, with the guiding member 52 in the second position, the peripheral aperture 72 is at least partially aligned with the outlet 62, and the peripheral aperture 74 is at least partially aligned with the outlet 64. The peripheral aperture 74 is also offset from the outlet 66. This alignment is, in part, possible due to the circumferential spacing between the peripheral apertures 72, 74. When the guiding member 52 is in the second position, the valve 26 is in the second configuration, in which the valve 26 is configured to direct fluid passing therethrough along the first path 46a through the outlet 62 and the second path 46b through the outlet 64.

With reference to Figure 12, with the guiding member 52 in the third position, the peripheral aperture 72 is at least partially aligned with the outlet 66, and offset from the outlets 62, 64, whereas the peripheral aperture 76 is offset from the outlets 62, 64, 66. When the guiding member 52 is in the third position, the valve 26 is in the third configuration, in which the valve is 26 is configured to direct fluid passing therethrough along the third path 46c through the outlet 66.

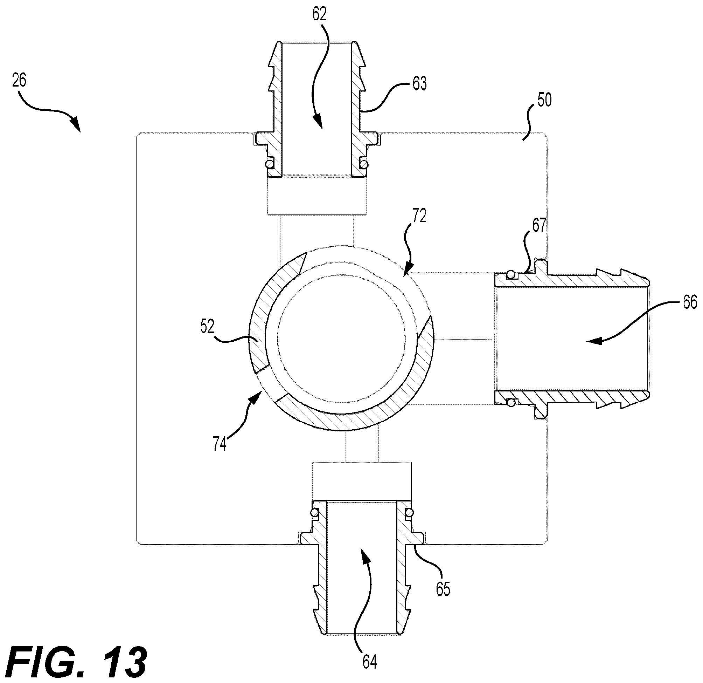

Referring to Figure 13, the guiding member 52 is further adjustable by rotating about the central axis 53 to a plurality of positions intermediate to the first and third positions, in which the peripheral aperture 72 is at least partially aligned with both of the outlets 62, 66. The peripheral aperture 72 can be aligned with both outlets 62, 66 due to, in part, the arcuate length thereof. When the guiding member 52 is in one of these plurality of positions, the valve 26 is one of a plurality of configurations intermediate to the first and third configurations, in which the valve 26 is configured to direct fluid passing therethrough along both the first and third paths 46a, 46c via the outlets 62, 66. It is to be noted that the guiding member 52 is adjustable to regulate how much of the fluid entering through the inlet 60 is directed along the first path 46a (i.e., exits through the outlet 62) and how much is directed along the third path 46c (i.e., exits through the outlet 66). Specifically, the valve 26 is configured so that as guiding member 52 is adjusted from the first position toward the third position, the valve is configured to decrease fluid flow along the first path 46a and increase fluid flow along the third path 46b. In other words, if the peripheral aperture 72 is more aligned with the outlet 66 than with the outlet 62, more of the fluid will be directed along the third path 46c. The adjustment of the valve 26 can be a progressive adjustment or a quick adjustment.

It is understood that guiding member 52 could be adjusted to still other positions. For example, the guiding member 52 could be adjusted to a position where the peripheral aperture 72 is aligned with the outlets 64, 66.

It is also contemplated that in embodiments where the enclosure 50 has additional inlets and/or outlets, the guiding member 52 would, accordingly, define additional apertures. In one example, an outlet could be provided on the enclosure 50 opposite to the inlet 60, and the guiding member 52 could define, on the cylinder base having the protrusion 76, an additional corresponding aperture.

The configuration of the valve 26, notably the various outlets thereof and the adjustment of the guiding member 52 to direct fluid in one or more of these outlets can assist in saving space relative to arrangements utilizing a plurality of valves to control operation of the multiple fluid path arrangements. In other words, the valve 26 is compact, which can be important in various circumstances, notably in vehicles.

As mentioned above, part of the valve actuator 54 is rotationally connected to the guiding member 52. The valve actuator 54 is further communicatively connected to the controller 44. The valve actuator 54 is configured to rotate the guiding member 52 in response to a command sent by the controller 44.

Referring back to Figure 1, the controller 44 is communicatively connected, as mentioned above, to the valve 26 (via the valve actuator 54) for adjusting the configuration thereof. The controller 44 is also connected to the pump 24, to the heater 28, to the heat exchanger 32, to the secondary pump 34, to the valve 37, to the radiator 42 as well as to the sensors 45a, 45b, 45c, 45d.

The sensors 45a, 45b, 45c, 45d are temperature sensors. The sensor 45a is disposed downstream from the pump 24 and upstream from the valve 26 and is configured to measure a temperature of the heat exchange fluid flowing thereby. By measuring a temperature of the fluid, a temperature of the fuel cell unit 22 can be approximated. The sensor 45b is operatively connected to the battery 36 and is configured to measure a temperature thereof. The sensor 45c is operatively connected to the motor 38 and is configured to measure a temperature thereof. The sensor 45d is operatively connected to the motor control unit 39 and is configured to measure a temperature thereof. It is contemplated that in other embodiments, there could be more or fewer sensors.

As will be described below, the controller 44 is configured to adjust the configuration of the valve 26, as well as operate the other components connected thereto, in response to the temperatures measured by the sensors 45a, 45b, 45c, 45d.

The temperature regulating management system 20 is configured to manage the temperature of the fuel cell unit 22 to aid in optimizing operation efficiency and lifespan of the fuel cell unit 22. Additionally, the temperature management system 20 is also configured to regulate the temperatures of the battery 36, the motor 38, and the motor control unit 39. For the purposes of the present description, the ideal operating temperature of the fuel cell unit 22 is about 45°C, and the ideal operating temperature of the battery 36 is about 25°C. It is understood that the ideal temperatures could vary in other embodiments. For instance, in some embodiments, depending on humidification and design, the ideal operating temperature of the fuel cell unit 22 could be about 80°C. The valve 26 directs fluid along the first, second and third paths 46a, 46b, 46c so that the temperatures of the fuel cell unit 22 and the battery 36 either reach and stabilize at their respective ideal operating temperatures or simply to avoid damaging temperatures.

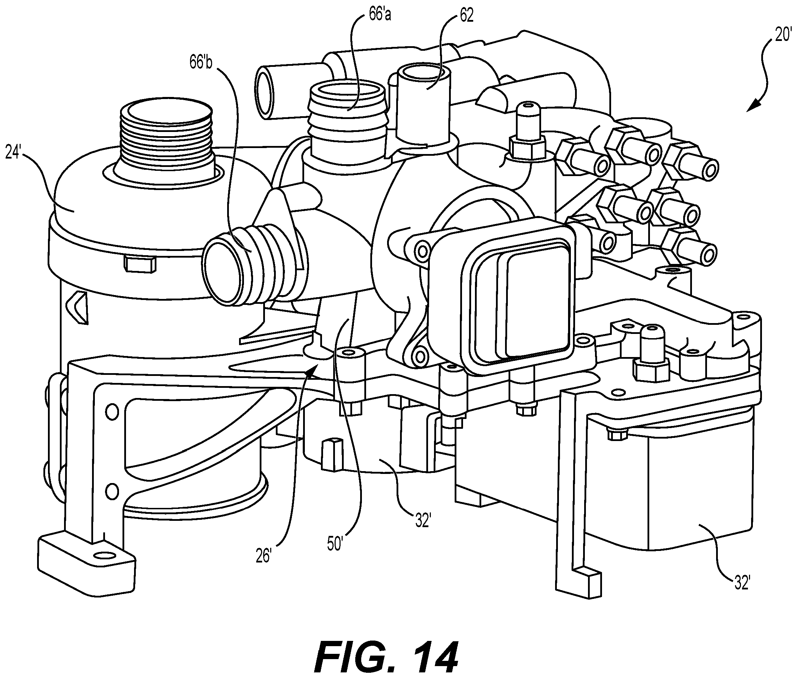

Referring to Figure 14, an alternate embodiment of part of the temperature regulating system 20, namely temperature regulating system 20' is shown. Features of the temperature regulating system 20' are similar to those of the temperature regulating system 20, and hence will not be described in detail herewith.

The temperature regulating system 20' is notably different in that the valve 26' thereof is different from the valve 26. In this embodiment, the outlet 66 has been divided into two outlets 66a, 66b, such that the valve 26' has four outlets.

Operation of the temperature management system 20 at various temperature conditions will now be described.

In one scenario, the temperature measured by the sensor 45a is about -10°C. The measured temperature is communicated to the controller 44, which upon determining that the fuel cell unit 22 is below a predetermined lower threshold temperature, causes the valve 26 to be adjusted to the first configuration. The predetermined lower threshold temperature can be preset, or adjusted dynamically as desired. In the present example, the predetermined lower threshold temperature is 5°C. In other embodiments, the predetermined lower threshold temperature could be 10°C. In some instances, predetermined lower threshold temperature is a lower temperature that will not damage the fuel cell unit 22. As a result, the fluid is directed to along the first path 45a (shown by broken lines in Figure 2). The controller 44 also causes the heater 28 to turn on and causes the pump 24 to pump. As a result, a temperature of the fluid flowing through the fuel cell unit 22 increases.

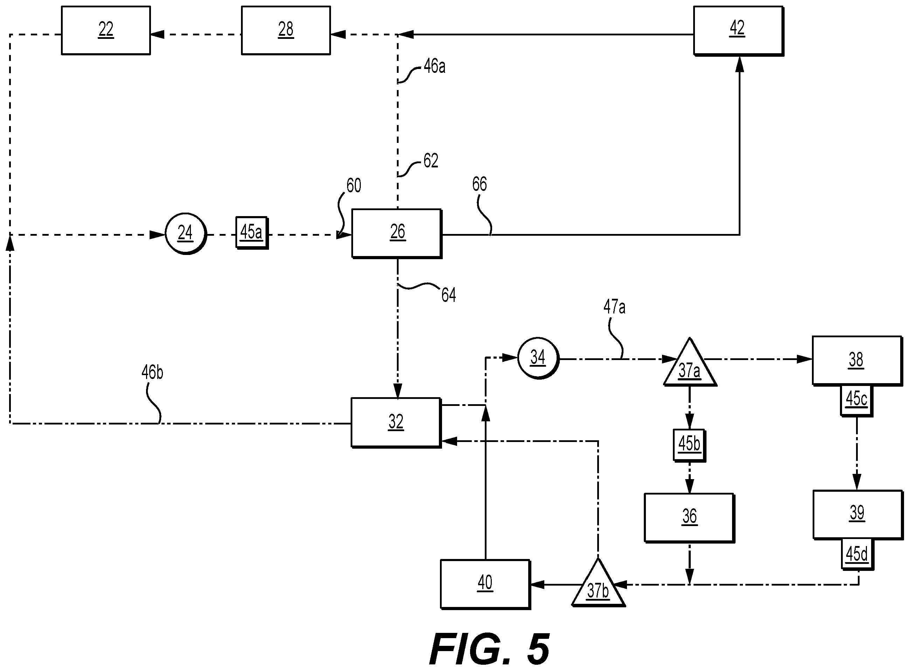

In another scenario, the temperatures measured by the sensors 45a, 45b are about 10°C. Thus, the measured temperature of the fluid flowing through the fuel cell unit 22 (i.e., temperature of the fuel cell unit 22) is above the predetermined lower threshold temperature, but below a predetermined intermediate threshold temperature. The predetermined intermediate threshold temperature can be preset or adjusted dynamically as desired. In the present example, the predetermined intermediate threshold temperature is 15°C. In other embodiments, the predetermined intermediate threshold temperature could be 20°C. Additionally, the measured temperature of the battery 36 is below its ideal operating temperature. These measurements are communicated to the controller 44, which upon determining that the fuel cell temperature is between the lower and intermediate threshold temperatures, and that the battery temperature is below its ideal operating temperature, causes the valve 26 to be adjusted to the second configuration. As a result of the valve 26 being in the second configuration, the fluid is directed along the first and second paths 45a, 45b (shown by broken and dash dotted lines in Figure 5). The controller 44 also causes the heater 28 to turn on and causes the pump 24 and the secondary pump 34 to pump.

As a result, fluid flows along the first path 46a and the second path 46b. Fluid flowing along the first path 46a, which is heated by the heater 28, heats the fuel cell unit 22, and then combines with the fluid flowing along the second path 46b before returning to the valve 26. On the other hand, fluid flowing along the second path 46b, which has been heated, to some extent, by combining with the fluid flowing along the first path 46a, flows through the heat exchanger 32 and then combines with the fluid flowing along the first path 46a before returning to the valve 26.

Due to the pumping of the secondary pump 34, fluid flowing along the first battery path 47a flows through the heat exchanger 32. Since the fluid flowing along the first battery path 47a is cooler than the fluid flowing along the second path 46b, heat exchange occurs, and the fluid along the first battery path 47a is heated as it goes through the heat exchanger 32. The fluid then flows toward the battery 36 to heat up said battery 36.

The sensors 45c, 45d also measure the temperatures of, respectively, the motor 38 and the motor control unit 39. If these temperatures are below their ideal operating temperatures (generally to start up the motor 38), the controller 44 causes the valve 37a to also direct fluid toward the motor 38 and the motor control unit 39 to heat up the motor 38 and the motor control unit 39. If, however, the temperatures of the motor 38 and the motor control unit 39 are above their ideal operating temperatures, or simply not in need of heating, the controller 44 causes the valve 37a to direct the fluid only toward the battery 36(i.e., bypass the motor 38 and the motor control unit 39).

In some instances, while the valve 26 is in the second configuration, the temperature of the battery 36 may reach its ideal operating temperature, whereas the temperature of the fuel cell unit 22 has not. In this scenario, the controller 44 could cause the valve 26 to be adjusted to the first configuration, so that fluid only flows along the first path 46a to heat up the fuel cell unit 22. To prevent the battery from overheating, the controller 44 also adjusts the valve 37b to the second configuration, such that fluid flows along the second fluid path 47b, thereby causing fluid to flow through the battery radiator 40.

In another scenario, the sensors 45a, 45b measure temperatures of about 20°C. Thus, the measured temperature of the fluid flowing through the fuel cell unit 22 (i.e., temperature of the fuel cell unit 22) is above the predetermined intermediate threshold temperature, but below a predetermined upper threshold temperature. The predetermined upper threshold temperature can be preset or adjusted dynamically as desired. In the present example, the predetermined upper threshold temperature is 55°C. In other embodiments, the predetermined upper threshold temperature could be 60°C. Additionally, the measured temperature of the battery 36 is below its ideal operating temperature. These measurements are communicated to the controller 44, which upon determining that the fuel cell temperature is between the intermediate and upper threshold temperatures, and that the battery temperature is below its ideal operating temperature, causes the valve 26 to be adjusted to the second configuration. As a result of the valve 26 being in the second configuration, the fluid is directed along the first and second paths 45a, 45b (shown by broken and dash dotted lines in Figure 5). The controller 44 also causes the heater 28 to turn off (which is different from when the temperature measured by the sensor 45a is below the predetermined intermediate threshold temperature) and causes the pump 24 and the secondary pump 34 to pump. During operation, the fuel cell unit 22 generates heat, such that the heater is no longer necessary for the fuel cell unit 22 to reach its ideal operating temperature. Furthermore, since the battery temperature is still below its ideal operating temperature, the second path 45b and the first battery path 47a aid in increasing the temperature of the battery 36.

Eventually, the battery temperature reaches its ideal operating temperature. When the sensor 45b measures about 25°C, and communicates this temperature to the controller 44, the controller 44 causes the valve 37b to be adjusted to the second position, so that the secondary fluid flows along the second battery path 47b. As a result, the temperature of the battery 36 is regulated by the battery radiator 40.

In another scenario, the sensor 45a measures a temperature of about 50°C. Thus, the measured temperature of the fluid flowing through the fuel cell unit 22 (i.e., temperature of the fuel cell unit 22) is above the ideal operating temperature, but remains below the predetermined upper threshold temperature. The measured temperature is communicated to the controller 44, which upon determining that the measured temperature slightly exceeds the ideal operating temperature, but is below the predetermined upper threshold temperature, causes the valve 26 to be adjusted to one of the plurality of configurations intermediate to the first and third configurations, such that fluid is directed along the first and third paths 46a, 46c. As a result, fluid flowing along the third path 46c, which is cooled by radiator 42, cools the fuel cell unit 22 before returning to the valve 26. In this scenario, the controller 44 has turned off the heater 28. Additionally, in this scenario, the temperature of the battery 36 is likely at or beyond its ideal operating temperature, such that the secondary fluid is configured to flow along the second battery path 47b.

In another scenario, the sensor 45a measures that the temperature of the fuel cell unit 22 is about 52°C (i.e., above the ideal operating temperature, but still below the predetermined upper threshold temperature). This temperature is communicated to the controller 44, which upon determining that the measured temperature exceeds the ideal operating temperature, but is below the predetermined temperature, causes the valve 26 to be further adjusted toward the third configuration, thereby increasing the fluid flowing through the third path 45c, and as such, increasing cooling rate of the fuel cell unit 22 by the fluid. In other words, the valve 26 is progressively moved toward the third configuration.

In another scenario, the sensor 45a measures that the temperature of the fuel cell unit 22 is about 60°C (i.e., above the predetermined upper threshold temperature). This temperature is communicated to the controller 44, which upon determining that the measured temperature exceeds the predetermined upper threshold temperature, causes the valve 26 to be adjusted to the third configuration, thereby increasing the fluid flowing through the third path 45c, and as such, increasing cooling rate of the fuel cell unit 22 by the fluid.

It is contemplated that in some embodiments, the valve 26 could be adjusted to be in a configuration where fluid flows along the first, second and third paths. This could happen, for example, when a temperature of the fuel cell unit 22 is slightly above its ideal operating temperature, but below the predetermined upper threshold temperature, and where the temperature of the battery 36 is below its ideal operating temperature. It is to be noted that in this scenario, the secondary fluid would be flowing along the first battery path 47a.

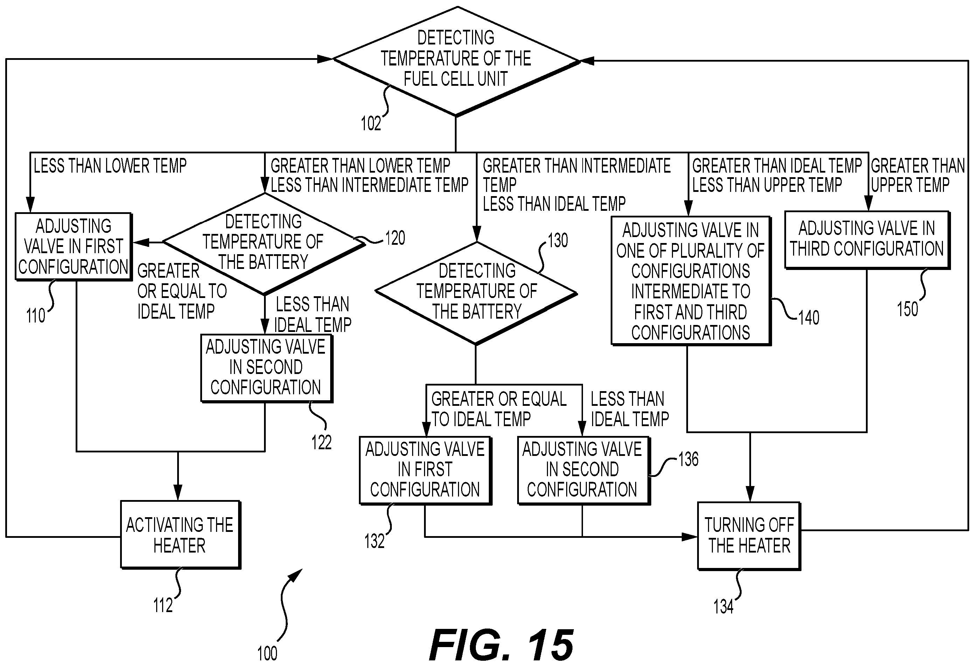

Referring now to Figure 15, a method 100 for regulating a temperature of the fuel cell unit 22 using the temperature management system 20 will now be described.

The method 100 begins at step 102 where the controller 44 detects the temperature of the fluid flowing through the fuel cell unit 22, and thereby approximates a temperature of the fuel cell unit.

If at step 102, the controller 44 determines that the temperature of the fuel cell unit 22 is less than a predetermined lower threshold temperature, then at step 110 the controller 44 causes adjustment of the valve 26 to the first configuration. Then, at step 112, the controller 44 causes activation of the heater 28. Then, the controller 44 returns to step 102.

If at step 102, the controller 44 determines that the temperature of the fuel cell unit 22 is greater than the predetermined lower threshold temperature, but lower than a predetermined intermediate threshold temperature, then at step 120, the controller 44 detects the temperature of the battery 36.

If at step 120, the controller 44 determines that the temperature of the battery 36 is greater or equal to the ideal operating temperature of the battery 36, the controller 44 proceeds with steps 110, 112 described hereabove.

If at step 120, the controller 44 determines that the temperature of the battery 36 is less than the ideal operating temperature of the battery 36, then at step 122, the controller 44 causes adjustment of the valve 26 to the second configuration, before proceeding to step 112 and back to step 102.

If at step 102, the controller 44 determines that the temperature of the fuel cell unit 22 is greater than the predetermined lower threshold temperature, but lower than the ideal operating temperature, then at step 130, the controller 44 detects the temperature of the battery 36.

If at step 130, the controller 44 determines that the temperature of the battery 36 is greater or equal to the ideal operating temperature of the battery 36, then at step 132, the controller 44 causes adjustment of the valve 26 to the first configuration. Then, at step 134, the controller 44 causes the heater 28 to turn off. Then, the controller 44 returns to step 102.

If at step 130, the controller 44 determines that the temperature of the battery 36 is less than the ideal operating temperature of the battery 36, then at step 136 the controller 44 causes adjustment of the valve 26 to the second configuration, and then proceeds to steps 134, 102.

If at step 102, the controller 44 determines that the temperature of the fuel cell unit 22 is greater than the ideal operating temperature thereof, but lower than a predetermined higher threshold temperature, then at step 140, the controller 44 causes adjustment of the valve 26 to the one of the plurality of configurations intermediate to the first and third configurations. Then, the controller 44 proceeds to steps 134, 102.

If at step 102, the controller 44 determines that the temperature of the fuel cell unit 22 is greater than the predetermined higher threshold temperature, then at step 150, the controller 44 causes adjustment of the valve 26 to the third configuration. Then, the controller 44 proceeds to steps 134,102.

In some embodiments, the predetermined lower threshold temperature is about 5°C, the predetermined intermediate threshold temperature is about 45°C, and the predetermined higher threshold temperature is about 55°C.

Modifications and improvements to the above-described embodiments of the present invention may become apparent to those skilled in the art. The foregoing description is intended to be exemplary rather than limiting. The scope of the present invention is therefore intended to be limited solely by the appended claims.

## Claims

1. A temperature management system (20) for a fuel cell unit (22), the temperature management system (20) comprising:
a pump (24);
a valve (26) fluidly connected to the pump (24), the valve (26) defining therein an inlet (60), a first outlet (62), a second outlet (64) and a third outlet (66);
a heater (28) fluidly connected to the valve (26) and fluidly connected to the pump (24), the heater (28) being selectively operable to heat fluid passing therethrough;
a heat exchanger (32) fluidly connected to the valve (26) and fluidly connected to the pump (24), the heat exchanger (32) being configured to be in thermal communication with a battery (36);
a radiator (42) fluidly connected to the valve (26) and fluidly connected to the pump, the radiator being configured to cool fluid passing therethrough;
the valve (26) being selectively adjustable between at least a first configuration, a second configuration and a third configuration:
in the first configuration, the valve (26) being configured to direct fluid along a first path (46a), the first path (46a) being defined at least in part by the first outlet (62), the heater (28), the fuel cell unit (22), the pump (24), and the inlet (60);
in the second configuration, the valve (26) being configured to direct fluid along the first path (46a) and along a second path (46b), the second path (46b) being defined at least in part by the second outlet (64), the heat exchanger (32), the pump (24) and the inlet (60); and
in the third configuration, the valve (26) being configured to direct fluid along a third path (46c), the third path (46c) being defined at least in part by the third outlet (66), the radiator (42), the fuel cell unit (22), the pump (24), and the inlet (60).

2. The temperature management system (20) of claim 1, wherein:
the valve (26) is selectively adjustable to a plurality of configurations intermediate to the first and third configurations; and
when the valve (26) is in one of the plurality of configurations, the valve (26) is configured to direct fluid along the first and third paths (46a, 46c).

3. The temperature management system (20) of claim 2, wherein:
the valve (26) is selectively and progressively adjustable from the first configuration to the one of the plurality of configurations; and
the valve (26) is configured to progressively decrease fluid flow along the first path (46a) and progressively increase fluid flow along the third path (46c), as the valve (26) is progressively adjusted during operation.

4. The temperature management system (20) of any one of claims 1 to 3, further comprising the battery (36) thermally connected to the heat exchanger (32) and electrically connectable to the fuel cell unit (22).

5. The temperature management system (20) of claim 4, wherein the pump (24) is a first pump (24); and further comprises a second pump (34) fluidly connected to the heat exchanger (32), the second pump (34) being operable to pump an other heat exchange fluid along a fourth path (47a), the fourth path (47a) being defined at least in part by the heat exchanger (47a), the second pump (34) and the battery (36).

6. The temperature management system (20) of claim 5, further comprising:
a motor (38) fluidly connected to the second pump (34); and
wherein the fourth path (47a) is further defined by the motor (38).

7. The temperature management system (20) of any one of claims 1 to 6, further comprising a controller (44) operatively connected to the valve (26), the controller (44) being configured to selectively adjust the configuration of the valve (26).

8. The temperature management system (20) of claim 7, wherein the controller (44) is configured to selectively adjust the configuration of the valve (26) in response to a temperature of the fuel cell unit (22).

9. The temperature management system (20) of claim 7 or 8, wherein the controller (44) is configured to selectively adjust the configuration of the valve (26) in response to a temperature of the battery (38).

10. The temperature management system of any one of claims 1 to 9, further comprising the fuel cell unit (22).

11. The temperature management system (20) of any one of claims 1 to 10, wherein the valve (26) is made of a non-ionizing material.

12. The temperature management system (20) of any one of claims 1 to 10, wherein the valve (26) comprises:
an enclosure (50) defining the inlet (60), the first outlet (62), the second outlet (64) and the third outlet (66); and
a guiding member (52) disposed within the enclosure (50), the guiding member (52) defining a first aperture (70), a second aperture (72) and a third aperture (74), and the guiding member (52) being adjustable between a first position, a second position and a third position,
in the first position, the first aperture (70) is aligned with the inlet (60), the second aperture (72) is at least partially aligned with the first outlet (62), and the third aperture (74) is offset from the first, second and third outlets (62, 64, 66);
in the second position, the first aperture (70) is aligned with the inlet (60), the second aperture (72) is at least partially aligned with the first outlet (62), and the third aperture (74) is aligned with the second outlet (64); and
in the third position, the first aperture (70) is aligned with the inlet (60), the second aperture (72) is at least partially aligned with the third outlet (66), and the third aperture (74) is offset from the first, second and third outlets (62, 64, 66).

13. The temperature management system of claim 12, wherein the guiding member (52) is generally cylindrical, the first aperture (70) is defined in a base of the guiding member (52), and the second and third apertures (72, 74) are defined on a peripheral surface of the guiding member (52).

14. A method (100) for regulating a temperature of a fuel cell unit (22), the method (100) comprising:
detecting a temperature of the fuel cell unit (22);
in response to the temperature of the fuel cell unit (22) being less than a first temperature:
adjusting a valve (26) to be in a first configuration, in the first configuration, the valve (26) being configured to direct fluid along a first path (46a), the first path (46a) being defined at least in part by the valve (26), a heater (28), the fuel cell unit (22), and a pump (24), and
activating the heater (28) to heat fluid flowing through the first path (46a),
in response to the temperature of the fuel cell unit (22) being more than the first temperature but less than a second temperature:
adjusting the valve (26) to be in a second configuration, in the second configuration, the valve (26) being configured to direct fluid along the first path (46a) and a second path (46b), the second path (46b) being defined at least in part by the valve (26), a heat exchanger (32), and the pump (24), and
activating the heater (28) to heat fluid flowing through the first path (46a); and
in response to the temperature of the fuel cell unit (22) being more than the second temperature:
adjusting the valve (26) to be in a third configuration, in the third configuration, the valve (26) being configured to direct fluid along a third path (46c), the third path (46c) being defined at least in part by the valve (26), a radiator (42), the fuel cell unit (22) and the pump (24).

15. The method (100) of claim 14, further comprising:
in response to the temperature being more than a third temperature but less than the second temperature, the third temperature being more than the first temperature:
adjusting the configuration of the valve (26) in one of a plurality of configurations intermediate to the first and third configurations, in which the valve (26) is configured to direct fluid through the first and third paths (46a. 46c); and
causing the heater (28) to stop heating fluid flowing along the first path (46a).

## Patentansprüche

1. Temperaturmanagementsystem (20) für eine Brennstoffzelleneinheit (22), wobei das Temperaturmanagementsystem (20) Folgendes umfasst:
eine Pumpe (24);
ein Ventil (26), das in Fluidverbindung mit der Pumpe (24) steht, wobei das Ventil (26) einen Einlass (60), einen ersten Auslass (62), einen zweiten Auslass (64) und einen dritten Auslass (66) darin definiert;
eine Heizvorrichtung (28), die in Fluidverbindung mit dem Ventil (26) und in Fluidverbindung mit der Pumpe (24) steht, wobei die Heizvorrichtung (28) selektiv betreibbar ist, um durch sie hindurchströmendes Fluid zu erwärmen;
einen Wärmetauscher (32), der in Fluidverbindung mit dem Ventil (26) und in Fluidverbindung mit der Pumpe (24) steht, wobei der Wärmetauscher (32) so konfiguriert ist, dass er in thermischer Kommunikation mit einer Batterie (36) steht;
einen Kühler (42), der in Fluidverbindung mit dem Ventil (26) und in Fluidverbindung mit der Pumpe steht, wobei der Kühler so konfiguriert ist, dass er durch ihn hindurchströmendes Fluid kühlt;
wobei das Ventil (26) selektiv zwischen mindestens einer ersten Konfiguration, einer zweiten Konfiguration und einer dritten Konfiguration einstellbar ist:
wobei das Ventil (26) in der ersten Konfiguration so konfiguriert ist, dass es Fluid entlang eines ersten Pfads (46a) leitet, wobei der erste Pfad (46a) zumindest teilweise durch den ersten Auslass (62), die Heizvorrichtung (28), die Brennstoffzelleneinheit (22), die Pumpe (24) und den Einlass (60) definiert ist;
wobei das Ventil (26) in der zweiten Konfiguration so konfiguriert ist, dass es Fluid entlang des ersten Pfads (46a) und entlang eines zweiten Pfads (46b) leitet, wobei der zweite Pfad (46b) zumindest teilweise durch den zweiten Auslass (64), den Wärmetauscher (32), die Pumpe (24) und den Einlass (60) definiert ist; und
wobei das Ventil (26) in der dritten Konfiguration so konfiguriert ist, dass es Fluid entlang eines dritten Pfads (46c) leitet, wobei der dritte Pfad (46c) zumindest teilweise durch den dritten Auslass (66), den Kühler (42), die Brennstoffzelleneinheit (22), die Pumpe (24) und den Einlass (60) definiert ist.

2. Temperaturmanagementsystem (20) nach Anspruch 1, wobei:
das Ventil (26) selektiv auf eine Vielzahl von Konfigurationen zwischen der ersten und dritten Konfiguration einstellbar ist; und
wenn sich das Ventil (26) in einer der Vielzahl von Konfigurationen befindet, das Ventil (26) so konfiguriert ist, dass es Fluid entlang des ersten und dritten Pfads (46a, 46c) leitet.

3. Temperaturmanagementsystem (20) nach Anspruch 2, wobei:
das Ventil (26) selektiv und schrittweise von der ersten Konfiguration auf eine der Vielzahl von Konfigurationen einstellbar ist; und
das Ventil (26) so konfiguriert ist, dass es den Fluidstrom entlang des ersten Pfads (46a) schrittweise verringert und den Fluidstrom entlang des dritten Pfads (46c) schrittweise erhöht, wenn das Ventil (26) während des Betriebs schrittweise eingestellt wird.

4. Temperaturmanagementsystem (20) nach einem der Ansprüche 1 bis 3, das ferner die Batterie (36) thermisch mit dem Wärmetauscher (32) verbunden und elektrisch mit der Brennstoffzelleneinheit (22) verbindbar umfasst.

5. Temperaturmanagementsystem (20) nach Anspruch 4, wobei die Pumpe (24) eine erste Pumpe (24) ist; und das ferner eine zweite Pumpe (34) umfasst, die mit dem Wärmetauscher (32) in Fluidverbindung steht, wobei die zweite Pumpe (34) betreibbar ist, um ein anderes Wärmeaustauschfluid
entlang eines vierten Pfads (47a) zu pumpen, wobei der vierte Pfad (47a) zumindest teilweise durch den Wärmetauscher (47a), die zweite Pumpe (34) und die Batterie (36) definiert ist.

6. Temperaturmanagementsystem (20) nach Anspruch 5, das ferner Folgendes umfasst:
einen Motor (38), der mit der zweiten Pumpe (34) in Fluidverbindung steht;
und wobei der vierte Pfad (47a) ferner durch den Motor (38) definiert ist.

7. Temperaturmanagementsystem (20) nach einem der Ansprüche 1 bis 6, das ferner eine Steuerung (44) umfasst, die betriebsmäßig mit dem Ventil (26) verbunden ist, wobei die Steuerung (44) so konfiguriert ist, dass sie die Konfiguration des Ventils (26) selektiv anpasst.

8. Temperaturmanagementsystem (20) nach Anspruch 7, wobei die Steuerung (44) so konfiguriert ist, dass sie die Konfiguration des Ventils (26) als Reaktion auf eine Temperatur der Brennstoffzelleneinheit (22) selektiv anpasst.

9. Temperaturmanagementsystem (20) nach Anspruch 7 oder 8, wobei die Steuerung (44) so konfiguriert ist, dass sie die Konfiguration des Ventils (26) als Reaktion auf eine Temperatur der Batterie (38) selektiv anpasst.

10. Temperaturmanagementsystem nach einem der Ansprüche 1 bis 9, das ferner die Brennstoffzelleneinheit (22) umfasst.

11. Temperaturmanagementsystem (20) nach einem der Ansprüche 1 bis 10, wobei das Ventil (26) aus einem nichtionisierenden Material besteht.

12. Temperaturmanagementsystem (20) nach einem der Ansprüche 1 bis 10, wobei das Ventil (26) Folgendes umfasst:
ein Gehäuse (50), das den Einlass (60), den ersten Auslass (62), den zweiten Auslass (64) und den dritten Auslass (66) definiert; und
ein Führungselement (52), das innerhalb des Gehäuses (50) angeordnet ist, wobei das Führungselement (52) eine erste Öffnung (70), eine zweite Öffnung (72) und eine dritte Öffnung (74) definiert und das Führungselement (52) zwischen einer ersten Position, einer zweiten Position und einer dritten Position verstellbar ist,
wobei in der ersten Position die erste Öffnung (70) an dem Einlass (60) ausgerichtet ist, die zweite Öffnung (72) zumindest teilweise an dem ersten Auslass (62) ausgerichtet ist und die dritte Öffnung (74) vom ersten, zweiten und dritten Auslass (62, 64, 66) versetzt ist;
in der zweiten Position die erste Öffnung (70) an dem Einlass (60) ausgerichtet ist, die zweite Öffnung (72) zumindest teilweise an dem ersten Auslass (62) ausgerichtet ist und die dritte Öffnung (74) an dem zweiten Auslass (64) ausgerichtet ist; und
in der dritten Position die erste Öffnung (70) an dem Einlass (60) ausgerichtet ist, die zweite Öffnung (72) zumindest teilweise an dem dritten Auslass (66) ausgerichtet ist und die dritte Öffnung (74) vom ersten, zweiten und dritten Auslass (62, 64, 66) versetzt ist.

13. Temperaturmanagementsystem nach Anspruch 12, wobei das Führungselement (52) im Allgemeinen zylindrisch ist, die erste Öffnung (70) in einer Basis des Führungselements (52) definiert ist und die zweite und dritte Öffnung (72, 74) auf einer Umfangsfläche des Führungselements (52) definiert sind.

14. Verfahren (100) zum Regeln einer Temperatur einer Brennstoffzelleneinheit (22), wobei das Verfahren (100) Folgendes umfasst:
Erfassen einer Temperatur der Brennstoffzelleneinheit (22);
als Reaktion darauf, dass die Temperatur der Brennstoffzelleneinheit (22) unter einer ersten Temperatur liegt:
Einstellen eines Ventils (26) auf eine erste Konfiguration, wobei das Ventil (26) in der ersten Konfiguration so konfiguriert ist, dass es Fluid entlang eines ersten Pfads (46a) leitet, wobei der erste Pfad (46a) zumindest teilweise durch das Ventil (26), eine Heizvorrichtung (28), die Brennstoffzelleneinheit (22) und eine Pumpe (24) definiert ist, und
Aktivieren der Heizvorrichtung (28), um das durch den ersten Pfad (46a) strömende Fluid zu erwärmen,
als Reaktion darauf, dass die Temperatur der Brennstoffzelleneinheit (22) über der ersten Temperatur, aber unter einer zweiten Temperatur liegt:
Einstellen des Ventils (26) auf eine zweite Konfiguration, wobei das Ventil (26) in der zweiten Konfiguration so konfiguriert ist, dass es Fluid entlang des ersten Pfads (46a) und eines zweiten Pfads (46b) leitet, wobei der zweite Pfad (46b) zumindest teilweise durch das Ventil (26), einen Wärmetauscher (32) und die Pumpe (24) definiert ist, und
Aktivieren der Heizvorrichtung (28), um das durch den ersten Pfad (46a) strömende Fluid zu erhitzen; und
als Reaktion darauf, dass die Temperatur der Brennstoffzelleneinheit (22) über der zweiten Temperatur liegt:
Einstellen des Ventils (26) auf eine dritte Konfiguration, wobei das Ventil (26) in der dritten Konfiguration so konfiguriert ist, dass es Fluid entlang eines dritten Pfads (46c) leitet, wobei der dritte Pfad (46c) zumindest teilweise durch das Ventil (26), einen Kühler (42), die Brennstoffzelleneinheit (22) und die Pumpe (24) definiert ist.

15. Verfahren (100) nach Anspruch 14, das ferner Folgendes umfasst:
als Reaktion darauf, dass die Temperatur über einer dritten Temperatur, aber unter der zweiten Temperatur liegt, wobei die dritte Temperatur höher als die erste Temperatur ist:
Einstellen der Konfiguration des Ventils (26) auf eine aus einer Vielzahl von Konfigurationen zwischen der ersten und dritten Konfiguration, in der das Ventil (26) so konfiguriert ist, dass es Fluid durch den ersten und dritten Pfad (46a, 46c) leitet; und
Bewirken, dass die Heizvorrichtung (28) den Heizfluidstrom entlang des ersten Pfads (46a) stoppt.

## Revendications

1. Système de gestion de température (20) destiné à une unité de pile à combustible (22), le système de gestion de température (20) comprenant :
une pompe (24) ;
une soupape (26) reliée fluidiquement à la pompe (24), la soupape (26) définissant en son sein une entrée (60), une première sortie (62), une deuxième sortie (64) et une troisième sortie (66) ;
un réchauffeur (28) relié fluidiquement à la soupape (26) et relié fluidiquement à la pompe (24), le réchauffeur (28) pouvant fonctionner sélectivement pour chauffer le fluide le traversant ;
un échangeur de chaleur (32) relié fluidiquement à la soupape (26) et relié fluidiquement à la pompe (24), l'échangeur de chaleur (32) étant conçu pour être en communication thermique avec une batterie (36) ;
un radiateur (42) relié fluidiquement à la soupape (26) et relié fluidiquement à la pompe, le radiateur étant conçu pour refroidir le fluide le traversant ;
la soupape (26) étant réglable sélectivement entre au moins une première configuration, une deuxième configuration et une troisième configuration :
dans la première configuration, la soupape (26) étant conçue pour diriger du fluide le long d'un premier chemin (46a), le premier chemin (46a) étant défini au moins en partie par la première sortie (62), le réchauffeur (28), l'unité de pile à combustible (22), la pompe (24) et l'entrée (60) ;
dans la deuxième configuration, la soupape (26) étant conçue pour diriger du fluide le long du premier chemin (46a) et le long d'un deuxième chemin (46b), le deuxième chemin (46b) étant défini au moins en partie par la deuxième sortie (64), l'échangeur de chaleur (32), la pompe (24) et l'entrée (60) ; et
dans la troisième configuration, la soupape (26) étant conçue pour diriger du fluide le long d'un troisième chemin (46c), le troisième chemin (46c) étant défini au moins en partie par la troisième sortie (66), le radiateur (42), l'unité de pile à combustible (22), la pompe (24) et l'entrée (60).

2. Système de gestion de température (20) selon la revendication 1, dans lequel :
la soupape (26) est réglable sélectivement selon une pluralité de configurations intermédiaires entre les première et troisième configurations ; et
lorsque la soupape (26) est dans l'une de la pluralité de configurations, la soupape (26) est conçue pour diriger du fluide le long des premier et troisième chemins (46a, 46c).

3. Système de gestion de température (20) selon la revendication 2, dans lequel :
la soupape (26) est réglable sélectivement et progressivement de la première configuration à l'une de la pluralité de configurations ; et
la soupape (26) est conçue pour diminuer progressivement la circulation de fluide le long du premier chemin (46a) et augmenter progressivement la circulation de fluide le long du troisième chemin (46c), à mesure que la soupape (26) est progressivement réglée pendant le fonctionnement.

4. Système de gestion de température (20) selon l'une quelconque des revendications 1 à 3, comprenant en outre la batterie (36) pouvant être reliée thermiquement à l'échangeur de chaleur (32) et pouvant être connectée électriquement à l'unité de pile à combustible (22).

5. Système de gestion de température (20) selon la revendication 4, dans lequel la pompe (24) est une première pompe (24) ; et comprend en outre une seconde pompe (34) reliée fluidiquement à l'échangeur de chaleur (32), la seconde pompe (34) pouvant fonctionner pour pomper un autre fluide d'échange de chaleur le long d'un quatrième chemin (47a), le quatrième chemin (47a) étant défini au moins en partie par l'échangeur de chaleur (47a), la seconde pompe (34) et la batterie (36).

6. Système de gestion de température (20) selon la revendication 5, comprenant en outre :
un moteur (38) relié fluidiquement à la seconde pompe (34) ;
et dans lequel le quatrième chemin (47a) est en outre défini par le moteur (38).

7. Système de gestion de température (20) selon l'une quelconque des revendications 1 à 6, comprenant en outre un dispositif de commande (44) relié de manière fonctionnelle à la soupape (26), le dispositif de commande (44) étant conçu pour régler sélectivement la configuration de la soupape (26).

8. Système de gestion de température (20) selon la revendication 7, dans lequel le dispositif de commande (44) est conçu pour régler sélectivement la configuration de la soupape (26) en réponse à une température de l'unité de pile à combustible (22).

9. Système de gestion de température (20) selon la revendication 7 ou 8, dans lequel le dispositif de commande (44) est conçu pour régler sélectivement la configuration de la soupape (26) en réponse à une température de la batterie (38).

10. Système de gestion de température selon l'une quelconque des revendications 1 à 9, comprenant en outre l'unité de pile à combustible (22).

11. Système de gestion de température (20) selon l'une quelconque des revendications 1 à 10, dans lequel la soupape (26) est constituée d'un matériau non ionisant.

12. Système de gestion de température (20) selon l'une quelconque des revendications 1 à 10, dans lequel la soupape (26) comprend :
une enceinte (50) définissant l'entrée (60), la première sortie (62), la deuxième sortie (64) et la troisième sortie (66) ; et
un élément de guidage (52) disposé à l'intérieur de l'enceinte (50), l'élément de guidage (52) définissant une première ouverture (70), une deuxième ouverture (72) et une troisième ouverture (74) et l'élément de guidage (52) étant réglable entre une première position, une deuxième position et une troisième position,
dans la première position, la première ouverture (70) est alignée avec l'entrée (60), la deuxième ouverture (72) est au moins partiellement alignée avec la première sortie (62) et la troisième ouverture (74) est décalée par rapport aux première, deuxième et troisième sorties (62, 64, 66) ;
dans la deuxième position, la première ouverture (70) est alignée avec l'entrée (60), la deuxième ouverture (72) est au moins partiellement alignée avec la première sortie (62) et la troisième ouverture (74) est alignée avec la deuxième sortie (64) ; et
dans la troisième position, la première ouverture (70) est alignée avec l'entrée (60), la deuxième ouverture (72) est au moins partiellement alignée avec la troisième sortie (66) et la troisième ouverture (74) est décalée par rapport aux première, deuxième et troisième sorties (62, 64, 66).

13. Système de gestion de température selon la revendication 12, dans lequel l'élément de guidage (52) est généralement cylindrique, la première ouverture (70) est définie dans une base de l'élément de guidage (52) et les deuxième et troisième ouvertures (72, 74) sont définies sur une surface périphérique de l'élément de guidage (52).

14. Procédé (100) de régulation d'une température d'une unité de pile à combustible (22), le procédé (100) comprenant :
la détection de la température de l'unité de pile à combustible (22) ;
en réponse au fait que la température de l'unité de pile à combustible (22) est inférieure à une première température :
le réglage d'une soupape (26) pour qu'elle soit dans une première configuration, dans la première configuration, la soupape (26) étant conçue pour diriger du fluide le long d'un premier chemin (46a), le premier chemin (46a) étant défini au moins en partie par la soupape (26), un réchauffeur (28), l'unité de pile à combustible (22) et une pompe (24) et
l'activation du réchauffeur (28) pour chauffer du fluide circulant suivant le premier chemin (46a),
en réponse au fait que la température de l'unité de pile à combustible (22) est supérieure à la première température mais inférieure à une deuxième température :
le réglage de la soupape (26) pour qu'elle soit dans une deuxième configuration, dans la deuxième configuration, la soupape (26) étant conçue pour diriger du fluide le long du premier chemin (46a) et d'un deuxième chemin (46b), le deuxième chemin (46b) étant défini au moins en partie par la soupape (26), un échangeur de chaleur (32) et la pompe (24) et
l'activation du réchauffeur (28) pour chauffer du fluide circulant suivant le premier chemin (46a) ; et
en réponse au fait que la température de l'unité de pile à combustible (22) est supérieure à la deuxième température :
la réglage de la soupape (26) pour qu'elle soit dans une troisième configuration, dans la troisième configuration, la soupape (26) étant conçue pour diriger du fluide le long d'un troisième chemin (46c), le troisième chemin (46c) étant défini au moins en partie par la soupape (26), un radiateur (42), l'unité de pile à combustible (22) et la pompe (24).

15. Procédé (100) selon la revendication 14, comprenant en outre :
en réponse au fait que la température est supérieure à une troisième température mais inférieure à la deuxième température, la troisième température étant supérieure à la première température :
le réglage de la configuration de la soupape (26) selon l'une des configurations d'une pluralité de configurations intermédiaires aux première et troisième configurations, dans lesquelles la soupape (26) est conçue pour diriger du fluide suivant les premier et troisième chemins (46a. 46c) ; et
le fait d'amener le réchauffeur (28) à arrêter de chauffer du fluide circulant le long du premier chemin (46a).
